# EUROPEAN PATENT SPECIFICATION

(11) **EP 2 751 340 B1**
(45) Date of publication and mention of the grant of the patent: **09.11.2016**
(21) Application number: 12756846.7
(22) Date of filing: 17.08.2012
(51) Int. Cl.: A01K 79/02

(54) **A MARINE LIFE PROTECTION SYSTEM AND METHOD OF USING SAME**
SCHUTZSYSTEM FÜR MEERESLEBEN UND VERWENDUNGSVERFAHREN DAFÜR
SYSTÈME DE PROTECTION DE VIE MARINE ET SON PROCÉDÉ D'UTILISATION

(30) Priority: 03.10.2011 US 201161542540 P
(43) Date of publication of application: 09.07.2014
(73) Proprietor: Dow Global Technologies LLC, Midland, MI 48674 (US)
(72) Inventor: DREWING, Joachim, 21723 Hollern-Twielenfleth (DE); BRUEHL, Karl-Heinz, 21682 Stade (DE); BRINKMANN, Andreas, 29683 Bad Fallingbostel (DE); BRENNER, Heinrich, F., 21614 Buxtehude (DE)
(74) Representative: Boult Wade Tennant
(86) International application number: PCT/US2012/051312
(87) International publication number: WO 2013/052205

(56) References cited:
- WO-A1-2005/066420
- US-A- 2 860 600
- US-B1- 6 641 328

## Description

### Field of Invention

The instant invention relates to a marine life protection system and a method of using same.

### Background of the Invention

Water is removed from natural and man-made water bodies by a variety of industries for various uses. For example, power plants, industrial plants, potable water suppliers and agricultural developments remove water from natural and man-made marine life habitats, including oceans, lakes, rivers and reservoirs. The uses of such water include, for example, cooling systems, hydroelectric turbines, irrigation systems, desalination systems, and municipal water supplies. In each such use, the presence of marine life can foul or disrupt operations. Therefore, fish exclusion devices, including a wide variety of screening methods, have been developed to prevent entrainment of fish and other large marine life with the water supply. Such methods not only protect the users of the water but also the marine life itself.

However, smaller marine life particles, such as larvae and eggs as well as certain plant life, are generally not protected by known screening methods. In some instances, the screen openings are too large such that the smaller marine life is entrained in the water intake. In yet other systems, the smaller marine life particles are trapped and collected on the screens and subsequently removed and returned to the water body. However, such handling generally results in a significant destruction rate, i.e., low survival rate.

As a measure to protect marine life species, including endangered species of flora and/or fauna, governmental agencies across the globe are imposing limits on the amount of marine life captured by water intake systems as a prerequisite to issuing permits for water intake systems. To be compatible with such regulations and/or permitting requirements, water intake systems must be designed to have negligible impact on species inhabiting the water body. In some circumstances, the water intake system must exclude 90% or more of each or specific species inhabitants.

US-A-2,860,600 discloses, in combination with an intake portal from a body of water, a perforated conduit adjacent the bottom of said body of water and substantially completely surrounding said intake portal, and a source of compressed air connected to said perforated conduit, whereby a curtain of air bubbles surrounding said intake portal will be produced to defer passage of fish from said body of water to said intake portal.

### Summary of the Invention

The instant invention is a marine life protection system and a method of protecting marine life from water intake systems.

According to claim 1, the instant invention provides a marine life protection system for use with a water intake system disposed to remove water from a water body through a water inlet, comprising a decanting wall spaced an effective distance from the water inlet thereby forming a critical intake zone, wherein the decanting wall extends above a surface of the water body and a gas source capable of generating a bubble curtain comprised of gas bubbles within the water body, wherein the gas source is spaced apart from, and on an opposite side of the decanting wall as the water inlet, wherein the gas bubbles comprise a gas selected from the group consisting of air, oxygen-enriched air, oxygen, nitrogen, and carbon dioxide.

According to claim 8, the instant invention further provides a method for protecting marine life inhabitants of a water body from entrainment in a water intake system, wherein the water intake system comprises a water inlet, comprising providing a decanting wall spaced an effective distance from the water inlet thereby forming a critical intake zone, wherein the decanting wall extends above a surface of the water body and producing a gas bubble curtain spaced apart from the decanting wall and on an opposite side of the decanting wall as the water inlet, wherein the bubble curtain extends at least a distance from the critical intake zone to above a lower edge of the decanting wall, wherein the gas bubble curtain comprises gas bubbles comprising one or more gasses selected from the group consisting of air, oxygen-enriched air, oxygen, nitrogen, and carbon dioxide.

The decanting wall is larger than the water inlet such that outer edges of the decanting wall extend beyond an opening formed by the water inlet; the decanting wall is spaced an effective distance above a floor of the water body; and the bubble curtain extends vertically at least a distance between the water body floor and a lower edge of the decanting wall.

The system may further comprise a substantially horizontal bottom plate situated below the decanting wall and extending a horizontal distance at least from the water intake system to the gas source; and the bubble curtain extends vertically at least a distance between the bottom plate and a lower edge of the decanting wall.

The water inlet may be surrounded by the water body, the decanting wall at least partially circumscribes the water inlet, and the gas source at least partially circumscribes the decanting wall.

The gas may be compressed air.

The system may further comprise one or more screen filters situated at a location selected from within the water inlet, adjacent to the water inlet, within the critical intake zone, and adjacent to the critical intake zone.

The one or more screens may comprise one or more rotating screens.

The system may further comprise an acoustic system positioned to repel mobile marine life away from the water inlet.

The method may further comprise providing one or more screen filters located at one or more positions selected from the areas consisting of within the water inlet, adjacent to the water inlet, within the critical intake zone, and adjacent the critical intake zone.

The method may further comprise providing an acoustic system positioned to repel mobile marine life away from the water inlet.

### Brief Description of the Drawings

For the purpose of illustrating the invention, there is shown in the drawings a form that is exemplary; it being understood, however, that this invention is not limited to the precise arrangements and instrumentalities shown.
**Fig. 1** is an elevational cross section view of a first embodiment of the invention;
**Fig. 2** is an elevational cross section view of a second embodiment of the invention;
**Fig. 3** is a top view of a third embodiment of the invention;
**Fig. 4** is an elevational cross section view of the third embodiment of the invention taken along line 4-4;
**Fig.** 4a is an elevational cross section view of the third embodiment of the invention taken along line 4a-4a; and
**Fig. 5** is a top view of the first embodiment of the invention.

### Detailed Description of the Invention

The instant invention is a marine life protection system for use with a water intake system disposed to remove water from a water body through a water inlet and a method for protecting marine life inhabitants of a water body from entrainment in a water intake system

The marine life protection system for use with a water intake system disposed to remove water from a water body through a water inlet according to the present invention comprises: a decanting wall spaced an effective distance from the water inlet thereby forming a horizontal critical intake zone, wherein the decanting wall extends above a surface of the water body; and a gas source capable of producing bubbles of a gas within the water body, wherein the gas source is spaced apart from, and on an opposite side of the decanting wall as the water inlet, and extending a length at least sufficient to surround the decanting wall; wherein the gas is selected from the group consisting of air, oxygen-enriched air, oxygen, nitrogen, and carbon dioxide.

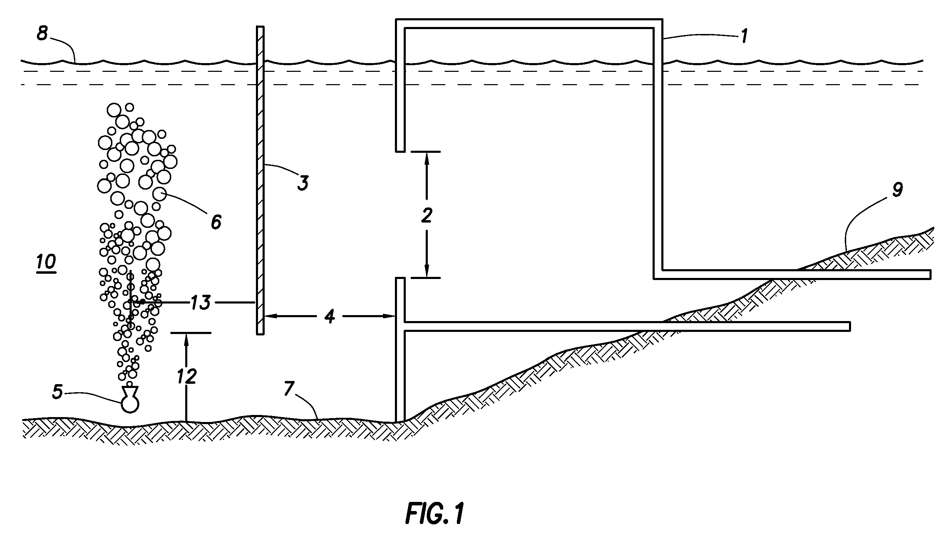

Referring to Fig. 1, it can be seen that in some instances a water intake system housed in a water intake building 1 having a substantially vertically disposed water inlet 2 may be located near or abutting a shore or land edge 9 of a water body 10 having a water surface 8 and a water body floor 7. In certain water bodies, the level of the water surface 8 may change over time, by natural causes such as tides, seasons, and rain amounts, or by man-made causes, such as dam flow or lock adjustments.

In a first embodiment, the marine life protection system comprises a decanting wall 3. The decanting wall 3 preferably extends above the highest level of the water surface 8, such as the high tide level. The decanting wall 3 is sufficiently sized to extend beyond the opening formed by the water inlet 2. The decanting wall 3 is spaced apart from water inlet 2 forming a horizontal critical intake zone 4. Spaced apart from the decanting wall 3 is a gas source 5. The gas source 5 releases a gas and is configured such that the released gas forms a bubble curtain 6. As can be seen in Fig. 1, the gas source 5 is positioned on a side of the decanting wall 3 opposite the side of the decanting wall 3on which the water inlet 2 is located. Water passes from the water body 10 through the horizontal critical intake zone 4 and into water inlet 2. Smaller marine life such as larvae, fish eggs and certain marine flora, however, are excluded from entrainment in the water flowing into the water inlet 2. First, lower density small marine life particles are excluded from entering the water inlet 2 as such lower density small marine life particles tend to float toward the water surface 8 and are excluded by the decanting wall which extends up to or above the water surface 8. As used herein, the term lower density small marine life particles means those non-mobile small marine life, such as larvae, fish eggs and marine flora particles which have a density equal to or less than the density of the water body 10. As would be readily understood, the density of the water body 10 may vary for a number of reasons, for example, depending upon the salt or mineral content of the water.

Higher density small marine life particles will also be excluded from entering the water inlet 2 as the bubble curtain 6 formed from the gas source 5 will cause such particles to be floated upward along the decanting wall 3 on the side of the decanting wall 3 opposite the side on which the water inlet 2 is located. Thus, such higher density small marine life particles do not reach the horizontal critical intake zone 4. As used herein, the term "higher density marine life particles" means those non-mobile small marine life, such as larvae, fish eggs and marine flora particles which have a density greater than the density of the water body 10. As discussed above, the density of the water body 10 may vary for a number of reasons.

In some instances, lower density marine life particle which may be, for a variety of causes, not near the water body surface, may also be floated upwards by the bubble curtain 6. For example, lower density larvae may hatch at or near the water body floor 7 at a location near the water inlet 2. In such instances, the bubble curtain 6 will function to assist in floating such larvae to the water surface 8 rather than being entrained in water entering the water inlet.

As used herein, the term "non-mobile small marine life" means those forms of marine life incapable of substantial independent movement, including for example, small marine flora, marine life larvae, such as fish, crustacean and/or coral larvae, marine life gametes and eggs, and young marine life. The term "incapable of substantial independent movement" as used herein means that the marine life particles are not able, on their own power, to resist natural currents of the water body or man-made water movements, such as a suction force caused by a water intake system.

In some embodiments of the invention, the horizontal critical intake zone 4 is spaced above, with its lower edge defined by, the water body floor 7.

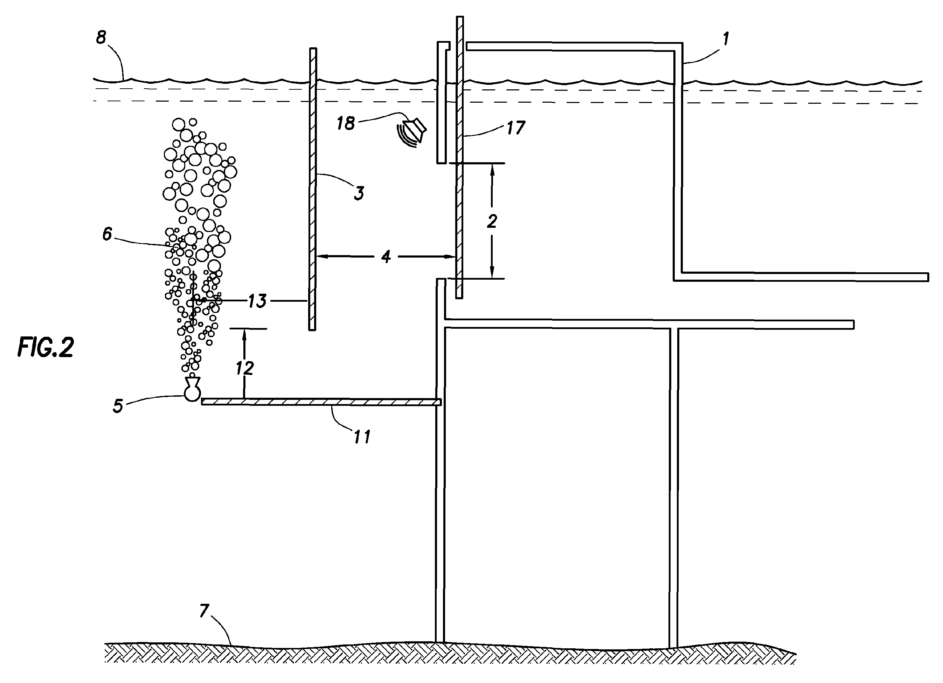

Fig. 2 illustrates a second embodiment of the inventive marine life protection system. The second embodiment of the marine life protection system further comprises a bottom plate 11 spaced below the decanting wall 3 and extending a distance at least from the water inlet 2 to the gas source 5. Together the bottom plate 11, decanting wall 3 and water intake system building 1 form a vertical critical intake zone 12. The embodiment of the marine life protection system shown in Fig. 2 is particularly useful for deeper water bodies in which it would be impractical to have a decanting wall 3 sufficiently large to extend to or above the water surface 8 while using the water body floor to form a critical intake zone 4.

Each of Figs. 1 and 2 illustrate distances 13 and 12. Distances 13 and 12 may be varied dependent upon a number of factors, including for example, the amount of water and/or rate of water flow needed by the water intake system, the size of bubble curtain attainable with the gas source available and level of endangered marine life particles present in the water body. Distance 13 may vary, for example, from 5 cm to 10 m. All individual values and sub ranges from 5 cm to 10 m are included herein and disclosed herein; for example, distance 13 can be from a lower limit of 5, 50, 200, 333, 450, 580, 699, 760, 880 or 990 cm to an upper limit of 10, 100, 300, 500, 700, 900 or 1,000 cm. For example, distance 13A may be in the range of from 5 to 500 cm, or in the alternative, distance 13 may be in the range of from 100 to 600 cm, or in the alternative, distance 13 may be in the range of from 500 to 900 cm, or in the alternative, distance 13 may be in the range of from 5 to 20 cm. Distance 12 may vary, for example, from 5 cm to 10 m. All individual values and sub ranges from 5 cm to 10 m are included herein and disclosed herein; for example, distance 12 can be from a lower limit of 5, 50, 200, 333, 450, 580, 699, 760, 880 or 990 cm to an upper limit of 10, 100, 300, 500, 700, 900 or 1,000 cm. For example, distance 12 may be in the range of from 5 to 500 cm, or in the alternative, distance 12 may be in the range of from 100 to 600 cm, or in the alternative, distance 12 may be in the range of from 500 to 900 cm, or in the alternative, distance 12 may be in the range of from 5 to 20 cm.

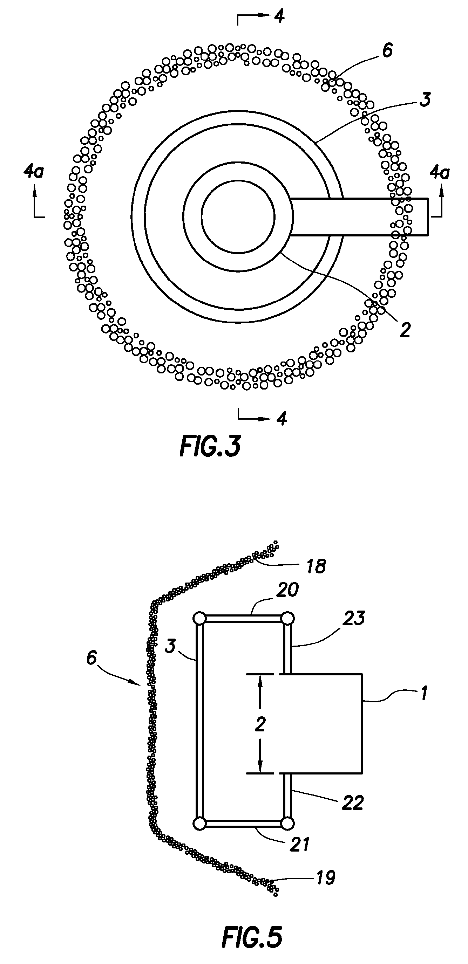

Fig. 3 illustrates a third embodiment of the inventive marine life protection system. The embodiment illustrated in Fig. 3 may be particularly useful in instances wherein a water inlet of a water intake system is surrounded wholly or almost wholly by the water body. Fig. 3 illustrates a top cross sectional view of the marine life protection system wherein a water inlet 2 is circumscribed by a decanting wall 3 which, in turn, is circumscribed by a bubble curtain 6 produced by a gas source (not shown in Fig. 3).

As can be seen in Fig. 3, the bubble curtain 6 encloses the water inlet 2. In alternative embodiments, such as that shown in Fig. 1 wherein the water inlet backs against a land edge 9, the bubble curtain 6 preferably extends sufficiently so as to cover the space in front of the water inlet 2 from which water may be drawn into the water inlet 2. In some such configurations, the bubble curtain extends up to the land edge 9.

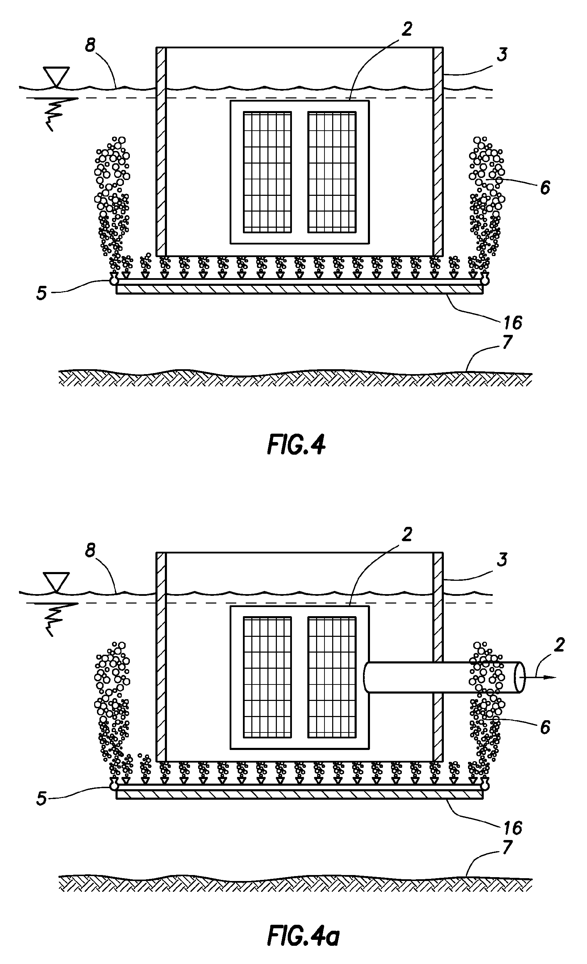

Fig. 4 illustrates an elevational cross sectional view of the third embodiment shown in Fig. 3 taken along the line 4-4. In Fig. 4, also shown is a bottom plate 16 spaced apart from and below the decanting wall 3 and water inlet 2. One configuration of a water inlet 2 is shown in Fig. 4 in which the water inlet 2 has two openings, each of which are covered by a screen 17. In yet another alternative embodiment of the invention, the floor of the water body may be used in lieu of the bottom plate 16. It will be readily understood that while the configuration of the water inlet 2, decanting wall 3 and gas source 5 are shown in a circular form in Fig. 3, any geometrical closed shape may be used, including for example, square, rectangular, pentagonal, hexagonal and the like as well as any irregular closed shape. It will be understood that the embodiment of the invention shown in Figs. 3 and 4 may alternatively be used without a bottom plate in those instances where the system is located sufficiently close to the water body floor 7.

Fig. 4a illustrates an elevational cross sectional view of the third embodiment shown in Fig. 3 taken along the line 4a-4a.

In another alternative embodiment of the inventive marine life protection system, the water inlet may be only partially circumscribed by the decanting wall. In yet another alternative embodiment of the inventive marine life protection system, the decanting wall may be only partially circumscribed by the gas source.

Fig. 5 illustrates a top plan view of one configuration of the embodiment illustrated in Fig. 1. In this embodiment, the bubble curtain 6 is in front of the water intake 2 with extension 18 and 19 leading up to or near a land edge 9. Decanting wall 3 may also be extended into side portions 20 and 21 and back portions 22 and 23. Side portions 20 and 21 and back portions 22 and 23 may extend to the water body floor 7, or may be raised some distance, not greater than distance 12 above the water body floor 7. The vertical position of each of side portions 20 and 21 and back portions 22 and 23 may be independently selected to accommodate the terrain of a particular installation. Likewise, the upward extension of each of side portions 20 and 21 and back portions 22 and 23 may be independently selected extend above the water body surface 8 or not. In some embodiments, the decanting wall 3 will have no side or back extensions, or may have any subset thereof. For example, in one embodiment, there may only be a side portion 20 and a back portion 23. In such embodiment, side portion 20 may extend above the water body floor 7 a distance 12 and extend above the water body surface 8. In such embodiment, back portion 23 may extend to the water body floor 7 and under the water body surface 8. That is, the presence and size of each of portions 20, 21, 22, and 23 may be independently selected.

Any gas may be used in the gas source to create the bubble curtain. Preferably, a gas which is not harmful to the marine environment or marine life is used. More preferably, a gas which is beneficial to the marine environment and marine life is used. Exemplary gasses include air, oxygen-enriched air, oxygen, nitrogen, and carbon dioxide. In particular embodiments, the gas is compressed air. In yet other embodiments, the gas is any inert gas.

Preferably, the bubble curtain used in the invention excludes marine life primarily by the physical effect of flotation and the upwardly flowing water current induced by the bubble curtain. It will be understood that some component of exclusion may also be achieved by a behavioral effect, namely, by aversion of mobile marine life to the bubble curtain. However, such behavioral exclusion primarily impacts adult, mobile fish life and does not impact the smaller, immobile marine life targeted by the present invention.

The inventive marine life protection system may be adapted to work with conventional methods for preventing entrainment of larger and/or mobile marine life, such as adult fish and crustaceans. For example, conventional screens may be used in a variety of locations of the inventive marine life protection system or within a conventional water intake system. Such screens may include, by way of example, static or rotating screens, as are currently known in the art. Such screen may be placed in alternative embodiments of the inventive system in one or more locations selected from the group consisting of within the water inlet, in front of the water inlet, behind the water inlet, within the critical intake zone, and above the critical intake zone but below the water inlet. Fig. 2 illustrates the presence of rotating screen filter 17 in the second embodiment of the inventive marine life protection system. As shown in Fig. 2, the filter 17 is located adjacent to the water inlet 2 and within the water intake system building 1.

It will be further appreciated that the bubble curtain and decanting wall will also remove other debris and particles that might block traditional screens, and particularly finer screens. Furthermore, removal of lower density and smaller particles, both debris and marine life, from the water stream by the bubble curtain and decanting wall permits the use of smaller mesh screens without exhibiting greater plugging, as would typically be expected with smaller mesh screens.

Another conventional system for repelling mobile and/or larger marine life from the water inlet is an acoustic system which projects an infra-sound uncomfortable to such marine life. Preferably the acoustic system would not emit frequencies harmful to marine life. More preferably, the acoustic system would emit an intensity gradient or pulsating acoustic signal such as to repel marine life at an effective distance from the water intake system. Fig. 2 further shows the use of an acoustic system 18 placed between the water intake system building 1 and the decanting wall 3.

In some embodiments of the inventive marine life protection system, at least 50% of a particular marine fauna or flora species in a water fraction is excluded from entering the water inlet. All values from at least 50% are included herein and disclosed herein. For example, the inventive marine life protection system may be capable of excluding 50%, 55%, 60%,65% 70%, 72%, 74%, 76%, 78%, 80%, 82%, 84%, 86% or 88% of any particular marine fauna or flora species in a water fraction from entering the water inlet.

Alternative embodiments of the inventive marine life protection system is capable of excluding at least 90 % of any particular marine fauna or flora species in a water fraction from entering the water inlet. All values from at least 90% are included herein and disclosed herein. For example, the inventive marine life protection system may be capable of excluding 90%, 92%, 94%, 96% or 100% of any particular marine fauna or flora species in a water fraction from entering the water inlet.

According to claim 8, the instant invention further provides a method for protecting marine life inhabitants of a water body from entrainment in a water intake system, wherein the water intake system comprises a water inlet, the method comprising providing a decanting wall spaced an effective distance from the water inlet thereby forming a critical intake zone, wherein the decanting wall extends above a surface of the water body and producing a gas bubble curtain spaced apart from the decanting wall and on an opposite side of the decanting wall as the water inlet, wherein the bubble curtain extends at least a distance from the critical intake zone to above a lower edge of the decanting wall, and wherein the gas bubble curtain comprises gas bubbles comprising one or more gasses selected from the group consisting of air, oxygen-enriched air, oxygen, nitrogen, and carbon dioxide.

The decanting wall is larger than the water inlet such that outer edges of the decanting wall extend beyond an opening formed by the water inlet. The decanting wall is spaced an effective distance above a floor of the water body and the bubble curtain extends vertically at least a distance between the floor of the water body and a lower edge of the decanting wall.

Specific embodiments of the inventive method further comprise providing a substantially horizontal bottom plate situated below the decanting wall and extending a horizontal distance at least from the water inlet to the bubble curtain. Such embodiment is particularly useful in those water intake system installations in deeper water bodies or located away from a shore or land edge of the water body.

As discussed above, certain water intake systems may have a water inlet which is surrounded by the water body. In those instances, the inventive method supplies a decanting wall which wholly or partially circumscribes the water inlet and further provides a gas source capable of generating a bubble curtain which wholly or partially circumscribes the decanting wall.

In a particular embodiment, the inventive method provides a gas source which utilizes compressed air to generate the bubble curtain.

In various embodiments of the inventive method, one or more conventional fish exclusion methods are included. For example, the inventive method may also comprise providing one or more filter screens, one or more electric field barriers, and/or one or more acoustic repelling systems.

In some embodiments of the inventive method, at least 90 % of any particular marine fauna or flora species in a water fraction is excluded from entering the water inlet. All values from at least 90% are included herein and disclosed herein. For example, the method may exclude 90%, 92%, 94%, 96% or 100% of any particular marine fauna or flora species in a water fraction.

## Claims

1. A marine life protection system for use with a water intake system disposed to remove water from a water body (10) through a water inlet (2), comprising:
a decanting wall (3) spaced an effective distance from the water inlet (2) thereby forming a critical intake zone (4), wherein the decanting wall (3) extends above a surface of the water body (10); and
a gas source (5) capable of generating a bubble curtain (6) comprised of gas bubbles within the water body (10), wherein the gas source (5) is spaced apart from, and on an opposite side of the decanting wall (3) as the water inlet (2);
wherein the gas bubbles comprise a gas selected from the group consisting of air, oxygen-enriched air, oxygen, nitrogen, and carbon dioxide; **characterized in that**
the decanting wall (3) is spaced an effective distance above a floor of the water body (10); and
the bubble curtain (6) extends vertically at least a distance between the water body floor (7) and a lower edge of the decanting wall (3); and **in that** the water inlet (2) abuts a shore or land edge (9) of the water body (10); wherein the decanting wall (3) is larger than the water inlet (2) such that outer edges of the decanting wall (3) extend beyond an opening formed by the water inlet (2).

2. The marine life protection system according to Claim 1, further comprising a substantially horizontal bottom plate (11) situated below the decanting wall (3) and extending a horizontal distance at least from the water intake system to the gas source (5); and wherein the bubble curtain (6) extends vertically at least a distance between the bottom plate (11) and a lower edge of the decanting wall (3).

3. The marine life protection system according to Claim 2, wherein the water inlet (2) is surrounded by the water body (10), the decanting wall (3) at least partially circumscribes the water inlet (2), and wherein the gas source (5) at least partially circumscribes the decanting wall (3).

4. The marine life protection system according to any one of the preceding Claims, wherein the gas is compressed air.

5. The marine life protection system according to any one of the preceding Claims, further comprising one or more screen filters situated at a location selected from within the water inlet (2), adjacent to the water inlet (2), within the critical intake zone (4), and adjacent to the critical intake zone (4).

6. The marine life protection system according to Claim 5, wherein the one or more screens (17) comprise one or more rotating screens.

7. The marine life protection system according to any one of the preceding Claims, further comprising an acoustic system (18) positioned to repel mobile marine life away from the water inlet (2).

8. A method for protecting marine life inhabitants of a water body (10) from entrainment in a water intake system, wherein the water intake system comprises a water inlet (2), comprising:
providing a decanting wall (3) spaced an effective distance from the water inlet (2) thereby forming a critical intake zone (4), wherein the decanting wall (3) extends above a surface of the water body (10); and
producing a gas bubble curtain (6) spaced apart from the decanting wall (3) and on an opposite side of the decanting wall (3) as the water inlet (2), wherein the bubble curtain (6) extends at least a distance from the critical intake zone (4) to above a lower edge of the decanting wall (3), wherein the decanting wall (3) is spaced an effective distance above a floor of the water body (10), and wherein the bubble curtain (6) extends vertically at least a distance between the water body floor (7) and a lower edge of the decanting wall (3);
wherein the gas bubble curtain comprises gas bubbles comprising one or more gasses selected from the group consisting of air, oxygen-enriched air, oxygen, nitrogen, and carbon dioxide; and wherein the water inlet (2) abuts a shore of the water body (10); wherein the decanting wall (3) is larger than the water inlet (2) such that outer edges of the decanting wall (3) extend beyond an opening formed by the water inlet (2).

9. The method according to Claim 8, further comprising providing a substantially horizontal bottom plate (11) situated below the decanting wall (3) and extending a horizontal distance at least from the water inlet (2) to the bubble curtain (6).

10. The method according to Claim 9, wherein the water inlet (2) is surrounded by the water body (10), wherein the decanting wall (3) at least partially circumscribes the water inlet (2), and wherein the bubble curtain (6) at least partially circumscribes the decanting wall (3).

11. The method according to any one of Claims 8-10, wherein the bubble curtain (6) comprises bubbles formed from compressed air.

12. The method according to any one of Claims 8-11, further comprising providing one or more screen filters located at one or more positions selected from the areas consisting of within the water inlet (2), adjacent to the water inlet (2), within the critical intake zone (4), and adjacent the critical intake zone (4).

13. The method according to Claim 12, wherein the one or more screens (17) comprise one or more rotating screens.

14. The method according to any one of Claims 8-13, further comprising providing an acoustic system (18) positioned to repel mobile marine life away from the water inlet (2).

## Patentansprüche

1. Ein Schutzsystem für Meeresleben zur Verwendung mit einem Wasseraufnahmesystem, das dazu angeordnet ist, Wasser durch einen Wassereinlass (2) aus einem Gewässer (10) zu entnehmen, beinhaltend:
eine Dekantierwand (3), die um eine wirksame Entfernung von dem Wassereinlass (2) beabstandet ist und dadurch eine kritische Aufnahmezone (4) bildet, wobei sich die Dekantierwand (3) über einer Oberfläche des Gewässers (10) erstreckt; und
eine Gasquelle (5), die in der Lage ist, einen aus Gasblasen bestehenden Blasenvorhang (6) innerhalb des Gewässers (10) zu erzeugen, wobei die Gasquelle (5) von der Dekantierwand (3) beabstandet ist und sich auf der anderen Seite der Dekantierwand befindet wie der Wassereinlass (2);
wobei die Gasblasen ein Gas beinhalten, das aus der Luft, sauerstoffangereicherte Luft, Sauerstoff, Stickstoff und Kohlendioxid umfassenden Gruppe ausgewählt wird; **dadurch gekennzeichnet, dass**
die Dekantierwand (3) um eine wirksame Entfernung nach oben von einem Boden des Gewässers (10) beabstandet ist; und
sich der Blasenvorhang (6) senkrecht um mindestens eine Entfernung zwischen dem Gewässerboden (7) und einem unteren Rand der Dekantierwand (3) erstreckt; und
dadurch, dass der Wassereinlass (2) an ein Ufer oder einen Geländerand (9) des Gewässers (10) angrenzt; wobei die Dekantierwand (3) größer als der Wassereinlass (2) ist, sodass sich die äußeren Ränder der Dekantierwand (3) über eine von dem Wassereinlass (2) gebildete Öffnung hinaus erstrecken.

2. Schutzsystem für Meeresleben gemäß Anspruch 1, weiter beinhaltend eine im Wesentlichen waagrechte Bodenplatte (11), die unter der Dekantierwand (3) gelegen ist und sich um eine waagrechte Entfernung mindestens von dem Wasseraufnahmesystem zu der Gasquelle (5) erstreckt; und wobei sich der Blasenvorhang (6) senkrecht um mindestens eine Entfernung zwischen der Bodenplatte (11) und einem unteren Rand der Dekantierwand (3) erstreckt.

3. Schutzsystem für Meeresleben gemäß Anspruch 2, wobei der Wassereinlass (2) von dem Gewässer (10) umgeben ist, die Dekantierwand (3) den Wassereinlass (2) mindestens teilweise umschreibt, und wobei die Gasquelle (5) die Dekantierwand (3) mindestens teilweise umschreibt.

4. Schutzsystem für Meeresleben gemäß einem der vorangehenden Ansprüche, wobei es sich bei dem Gas um Druckluft handelt.

5. Schutzsystem für Meeresleben gemäß einem der vorangehenden Ansprüche, weiter beinhaltend einen oder mehrere Siebfilter, die an einem Ort gelegen sind, der aus innerhalb des Wassereinlasses (2), dem Wassereinlass (2) benachbart, innerhalb der kritischen Aufnahmezone (4) und der kritischen Aufnahmezone (4) benachbart ausgewählt wird.

6. Schutzsystem für Meeresleben gemäß Anspruch 5, wobei das eine oder die mehreren Siebe (17) ein oder mehrere sich drehende Siebe beinhalten.

7. Schutzsystem für Meeresleben gemäß einem der vorangehenden Ansprüche, weiter beinhaltend ein Schallsystem (18), das dazu positioniert ist, bewegliches Meeresleben von dem Wassereinlass (2) abzuschrecken.

8. Ein Verfahren zum Schützen von Meereslebenbewohnern eines Gewässers (10) davor, in einem Wasseraufnahmesystem mitgerissen zu werden, wobei das Wasseraufnahmesystem einen Wassereinlass (2) beinhaltet, beinhaltend:
Bereitstellen einer Dekantierwand (3), die um eine wirksame Entfernung von dem Wassereinlass (2) beabstandet ist und dadurch eine kritische Aufnahmezone (4) bildet, wobei sich die Dekantierwand (3) über einer Oberfläche des Gewässers (10) erstreckt; und
Herstellen eines Gasblasenvorhangs (6), der von der Dekantierwand (3) beabstandet ist und sich auf der anderen Seite der Dekantierwand (3) befindet wie der Wassereinlass (2), wobei sich der Blasenvorhang (6) um mindestens eine Entfernung von der kritischen Aufnahmezone (4) bis über einen unteren Rand der Dekantierwand (3) erstreckt, wobei die Dekantierwand (3) um eine wirksame Entfernung nach oben von einem Boden des Gewässers (10) beabstandet ist, und wobei sich der Blasenvorhang (6) senkrecht um mindestens eine Entfernung zwischen dem Gewässerboden (7) und einem unteren Rand der Dekantierwand (3) erstreckt;
wobei der Gasblasenvorhang Gasblasen beinhaltet, die ein oder mehrere Gase beinhalten, die aus der aus Luft, sauerstoffangereicherter Luft, Sauerstoff, Stickstoff und Kohlendioxid bestehenden Gruppe ausgewählt werden; und wobei der Wassereinlass (2) an ein Ufer des Gewässers (10) angrenzt; wobei die Dekantierwand (3) größer als der Wassereinlass (2) ist, sodass sich die äußeren Ränder der Dekantierwand (3) über eine von dem Wassereinlass (2) gebildete Öffnung hinaus erstrecken.

9. Verfahren gemäß Anspruch 8, weiter beinhaltend das Bereitstellen einer im Wesentlichen waagrechten Bodenplatte (11), die unter der Dekantierwand (3) gelegen ist und sich um eine waagrechte Entfernung mindestens von dem Wassereinlass (2) zu dem Blasenvorhang (6) erstreckt.

10. Verfahren gemäß Anspruch 9, wobei der Wassereinlass (2) von dem Gewässer (10) umgeben ist, wobei die Dekantierwand (3) den Wassereinlass (2) mindestens teilweise umschreibt, und wobei der Blasenvorhang (6) die Dekantierwand (3) mindestens teilweise umschreibt.

11. Verfahren gemäß einem der Ansprüche 8-10, wobei der Blasenvorhang (6) aus Druckluft gebildete Blasen beinhaltet.

12. Verfahren gemäß einem der Ansprüche 8-11, weiter beinhaltend das Bereitstellen von einem oder mehreren Siebfiltern, die sich an einer oder mehreren Stellen befinden, die aus den innerhalb des Wassereinlasses (2), dem Wassereinlass (2) benachbart, innerhalb der kritischen Aufnahmezone (4) und der kritischen Aufnahmezone (4) benachbart umfassenden Gebieten ausgewählt werden.

13. Verfahren gemäß Anspruch 12, wobei das eine oder die mehreren Siebe (17) ein oder mehrere sich drehende Siebe beinhalten.

14. Verfahren gemäß einem der Ansprüche 8-13, weiter beinhaltend das Bereitstellen eines Schallsystems (18), das dazu positioniert ist, bewegliches Meeresleben von dem Wassereinlass (2) abzuschrecken.

## Revendications

1. Un système de protection de vie marine destiné à être utilisé avec un système d'admission d'eau disposé pour éliminer l'eau d'un corps d'eau (10) à travers une entrée d'eau (2), comprenant :
une paroi de décantation (3) espacée d'une distance effective de l'entrée d'eau (2) formant ainsi une zone d'admission critique (4), la paroi de décantation (3) s'étendant au-dessus d'une surface du corps d'eau (10) ; et
une source de gaz (5) capable de générer un rideau de bulles (6) constitué de bulles de gaz au sein du corps d'eau (10), la source de gaz (5) étant espacée de, et sur un côté opposé de la paroi de décantation (3) comme l'entrée d'eau (2) ;
les bulles de gaz comprenant un gaz sélectionné dans le groupe composé d'air, d'air enrichi en oxygène, d'oxygène, d'azote, et de dioxyde de carbone ; **caractérisé en ce que**
la paroi de décantation (3) est espacée d'une distance effective au-dessus d'un fond du corps d'eau (10) ; et
le rideau de bulles (6) s'étend verticalement sur au moins une distance entre le fond de corps d'eau (7) et un bord inférieur de la paroi de décantation (3) ; et **en ce que** l'entrée d'eau (2) bute contre un rivage ou un bord de terre (9) du corps d'eau (10) ; la paroi de décantation (3) étant plus grande que l'entrée d'eau (2) de telle sorte que des bords extérieurs de la paroi de décantation (3) s'étendent au-delà d'une ouverture formée par l'entrée d'eau (2).

2. Le système de protection de vie marine selon la revendication 1, comprenant en outre une plaque de dessous substantiellement horizontale (11) située sous la paroi de décantation (3) et s'étendant sur une distance horizontale au moins depuis le système d'admission d'eau jusqu'à la source de gaz (5) ; et le rideau de bulles (6) s'étendant verticalement sur au moins une distance entre la plaque de dessous (11) et un bord inférieur de la paroi de décantation (3).

3. Le système de protection de vie marine selon la revendication 2, l'entrée d'eau (2) étant entourée par le corps d'eau (10), la paroi de décantation (3) circonscrivant au moins partiellement l'entrée d'eau (2), et la source de gaz (5) circonscrivant au moins partiellement la paroi de décantation (3).

4. Le système de protection de vie marine selon l'une quelconque des revendications précédentes, le gaz étant de l'air comprimé.

5. Le système de protection de vie marine selon l'une quelconque des revendications précédentes, comprenant en outre un ou plusieurs filtres à tamis situés à un emplacement sélectionné parmi : au sein de l'entrée d'eau (2), adjacent à l'entrée d'eau (2), au sein de la zone d'admission critique (4), et adjacent à la zone d'admission critique (4).

6. Le système de protection de vie marine selon la revendication 5, ce ou ces tamis (17) comprenant un ou plusieurs tamis rotatifs.

7. Le système de protection de vie marine selon l'une quelconque des revendications précédentes, comprenant en outre un système acoustique (18) positionné pour repousser la vie marine mobile loin de l'entrée d'eau (2).

8. Un procédé destiné à protéger les habitants de vie marine d'un corps d'eau (10) contre un entraînement dans un système d'admission d'eau, le système d'admission d'eau comprenant une entrée d'eau (2), comprenant :
le fait de fournir une paroi de décantation (3) espacée d'une distance effective de l'entrée d'eau (2) formant ainsi une zone d'admission critique (4), la paroi de décantation (3) s'étendant au-dessus d'une surface du corps d'eau (10) ; et
le fait de fournir un rideau de bulles de gaz (6) espacé de la paroi de décantation (3) et sur un côté opposé de la paroi de décantation (3) comme l'entrée d'eau (2), le rideau de bulles (6) s'étendant sur au moins une distance depuis la zone d'admission critique (4) jusqu'au-dessus d'un bord inférieur de la paroi de décantation (3), la paroi de décantation (3) étant espacée d'une distance effective au-dessus d'un fond du corps d'eau (10), et le rideau de bulles (6) s'étendant verticalement sur au moins une distance entre le fond de corps d'eau (7) et un bord inférieur de la paroi de décantation (3) ;
le rideau de bulles de gaz comprenant des bulles de gaz comprenant un ou plusieurs gaz sélectionnés dans le groupe composé d'air, d'air enrichi en oxygène, d'oxygène, d'azote, et de dioxyde de carbone ; et l'entrée d'eau (2) butant contre un rivage du corps d'eau (10) ; la paroi de décantation (3) étant plus grande que l'entrée d'eau (2) de telle sorte que les bords extérieurs de la paroi de décantation (3) s'étendent au-delà d'une ouverture formée par l'entrée d'eau (2).

9. Le procédé selon la revendication 8, comprenant en outre le fait de fournir une plaque de dessous substantiellement horizontale (11) située sous la paroi de décantation (3) et s'étendant sur une distance horizontale au moins depuis l'entrée d'eau (2) jusqu'au rideau de bulles (6).

10. Le procédé selon la revendication 9, l'entrée d'eau (2) étant entourée par le corps d'eau (10), la paroi de décantation (3) circonscrivant au moins partiellement l'entrée d'eau (2), et la source de gaz (6) circonscrivant au moins partiellement la paroi de décantation (3).

11. Le procédé selon l'une quelconque des revendications 8 à 10, le rideau de bulles (6) comprenant des bulles formées d'air comprimé.

12. Le procédé selon l'une quelconque des revendications 8 à 11, comprenant en outre le fait de fournir un ou plusieurs filtres à tamis situés à une ou plusieurs positions sélectionnées parmi les endroits composés de : au sein de l'entrée d'eau (2), adjacente à l'entrée d'eau (2), au sein de la zone d'admission critique (4), et adjacente à la zone d'admission critique (4).

13. Le procédé selon la revendication 12, ce ou ces tamis (17) comprenant un ou plusieurs tamis rotatifs.

14. Le procédé selon l'une quelconque des revendications 8 à 13, comprenant en outre le fait de fournir un système acoustique (18) positionné pour repousser la vie marine mobile loin de l'entrée d'eau (2).
